# EUROPÄISCHE PATENTANMELDUNG

(11) **EP 2 226 440 A2**
(43) Veröffentlichungstag der Anmeldung: **08.09.2010**
(21) Anmeldenummer: 10154971.5
(22) Anmeldetag: 27.02.2010
(51) Int. Cl.: E04B 1/26

(54) **Beschlagelement**

(30) Priorität: 05.03.2009 DE 102009013146
(71) Anmelder: SWG Schraubenwerk Gaisbach GmbH, 74638 Waldenburg (DE)
(72) Erfinder: Ernst, Henning, 76761, Rülzheim (DE)
(74) Vertreter: Patentanwälte Ruff, Wilhelm, Beier, Dauster & Partner

(57) **Zusammenfassung**

Es wird ein Beschlagelement mit einer Kegelmantelfläche und einem Durchgang für eine Schraube vorgeschlagen, dessen Achse schräg gegenüber der Achse des Kegels verläuft. Das Beschlagelement ist zum Einsetzen in eine Öffnung eines Beschlaggegenelements ausgebildet, das eine sich kegelförmige erweiternde Wand aufweist. Eine durch den Durchgang geschraubte Schraube befestigt durch Angreifen des Beschlagelements an dem Beschlaggegenelement dieses an einem Bauelement. Durch die schräge Anordnung der Schraube wird diese in erster Linie auf Zug beansprucht.

## Beschreibung

Die Erfindung betrifft ein Beschlagteil ähnlich einer Unterlegscheibe.

Zur Verbindung von Holzbauteilen, beispielsweise Holzbalken oder dergleichen in gegenseitiger Längsrichtung ist es bislang üblich, die Holzbauteile beispielsweise dadurch zu verbinden, dass auf beiden Seiten der Balken gelochte Metallstreifen, Flachstahl oder dergleichen befestigt werden. Auf diese Weise können auch Holzbauteile mit Metallbauteilen verbunden werden. Zur Anbringung der Metallstreifen beziehungsweise des Flachstahls an den Holzbauteilen werden beispielsweise Schlossschrauben verwendet, die von dem Metallstreifen auf der einen Seite durch den Balken hindurch zu einem Metallstreifen auf der anderen Seite gehen und dort mit einer Mutter gesichert sind. Ebenfalls möglich ist es, den Metallstreifen mit Holzschrauben festzuschrauben. In beiden Fällen erfolgt eine Beanspruchung der Schrauben quer zur Längsachse, also auf Scherung des Schraubenschafts. Ebenfalls bekannt ist die Befestigung mit Nägeln. Auch hier erfolgt die Beanspruchung der Befestigungselemente quer zur Längsachse, also auf Scherung. Stiftförmige Verbindungselemente lassen sich aber in Zugrichtung stärker belasten als auf Scherung.

Es ist daher schon vorgeschlagen worden, die Metallstreifen mit schräg gebohrten Löchern zu versehen, so dass die Holzschrauben schräg eingeschraubt werden können. Dadurch wird dafür gesorgt, dass die Schrauben überwiegend auf Zug beansprucht werden. Hierzu ist es aber erforderlich, das die Schraubenköpfe flächig anliegen. Aus diesem Grunde muss ein Sitz für die Unterseite der Schraubenköpfe hergestellt werden.

Auch bei der Anbringung von Metallelementen an Stirnholz ist es erforderlich, die Schrauben schräg zur Oberfläche einzuschrauben. Auch hier muss ein Metallelement schräg verlaufende Löcher mit einem Sitz für die Unterseite des Schraubenkopfs aufweisen.

Der Erfindung liegt die Aufgabe zu Grunde, ein Beschlagelement zu schaffen, mit dessen Hilfe es möglich ist, Metallteile an Holz in der Weise zu befestigen, dass eine Belastung der stiftförmigen Befestigungselemente überwiegend in Zugrichtung erfolgt.

Zur Lösung dieser Aufgabe schlägt die Erfindung ein Beschlagelement mit den Merkmalen des Anspruchs 1 vor.

Die Erfindung schlägt ebenfalls ein Beschlaggegenelement vor, das mit dem Beschlagelement an einem Holzbauteil angebracht werden kann.

Die Erfindung schlägt weiterhin die Verwendung eines Beschlagelements vor.

Weiterbildungen der Erfindung sind Gegenstand der jeweiligen Unteransprüche.

Das von der Erfindung vorgeschlagene Beschlagelement weist also einen Außenumfang auf, der in einer Kegelfläche liegt. Der Durchgang für eine Schraube verläuft schräg gegenüber der Achse des Kegels. Ein an einem Holzbauteil zu befestigendes Metallelement mit einer Bohrung wird nun mit einer Ansenkung versehen. In diese Ansenkung wird das Beschlagelement eingesetzt, wobei natürlich die Ansenkung den gleichen Winkel aufweisen muss wie das Beschlagelement. Mithilfe des Beschlagelements, das ähnlich wie eine Unterlegscheibe wirkt, wird nun das Metallelement an dem Holz festgeschraubt, wobei die Schraube dann auch schräg zur Oberfläche des Holzbauteils verläuft. Wird nun auf das Metallelement eine Kraft in Richtung der Oberfläche des Holzbauteils ausgeübt, führt dies zu einer Belastung der Schraube in Axialrichtung und nicht zu einer Belastung auf Scherung.

Für die Funktion des Beschlagelements nach der Erfindung sind beliebige Kegelformen möglich, jedoch wird aus Gründen der Einfachheit in Weiterbildung ein gerader Kreiskegel bevorzugt. Dies gilt insbesondere dann, wenn an dem festzuschraubenden Metallbauteil eine Ansenkung mithilfe einer Bohrmaschine durchgeführt werden soll.

Erfindungsgemäß kann in Weiterbildung vorgesehen sein, dass die Anlagefläche für die Unterseite des Schraubenkopfs versenkt in dem Beschlagelement angeordnet ist. Als Kopfform wird eine Senkkopfschraube bevorzugt.

Das von der Erfindung vorgeschlagene Beschlagelement kann etwa die Form einer Scheibe aufweisen, also eine ebene Unterseite und eine ebene Oberseite aufweisen. Das Beschlagelement kann aber auch vereinfacht ausgebildet sein, da für die Kraftübertragung einerseits nur die Anlagefläche für die Unterseite des Schraubenkopfs und andererseits die Berührungsfläche zwischen der Außenseite des Beschlagelements und der Innenseite der Ansenkung im Metallteile dient. Hinzu kommt noch, dass wegen der schrägen Anordnung der Schraube die in Richtung des schrägen Verlaufs angeordnete Seite des Beschlagteils stärker beaufschlagt wird. Daher kann auch das Beschlagelement unsymmetrisch ausgebildet sein und dort, wo die Belastung größer ist, stärker.

Es ist auch nicht erforderlich, dass die kegelförmige Außenfläche des Beschlagelements geschlossen ist.

Erfindungsgemäß kann vorgesehen sein, dass der Spitzenwinkel des Kegels, auf dessen Kegelfläche die Außenkontur des Beschlagelements liegt, im Bereich von etwa 90° liegt.

Es wurde bereits erwähnt, dass das Beschlagelement beispielsweise dazu dienen kann, ein Metallprofil an einem Holzelement anzuschrauben, das mit Ansenkungen versehene Löcher aufweist.

Das Beschlagelement kann zum Anschrauben beliebiger Gegenelemente verwendet werden, wobei als einzige Voraussetzung gegeben sein muss, dass dieses Gegenelement Ansenkungen mit dem gleichen Spitzenwinkel aufweist wie das Beschlagelement.

Die Erfindung schlägt aber ebenfalls ein Beschlaggegenelement vor, um Verbindungen zwischen Holzteilen zu ermöglichen, bei denen keine solchen sowieso schon verwendeten Metallteile zum Einsatz kommen. Dieses Beschlaggegenelement weist erfindungsgemäß eine zur Anlage an einem aus Holz bestehenden Bauelement bestimmte Rückseite, eine der Rückseite gegenüberliegende Vorderseite und einen Durchgang zwischen der Vorderseite und der Rückseite auf, der von einer in einer Kegelfläche liegenden Fläche begrenzt ist. Anders ausgedrückt, ist in diesem Beschlaggegenelement eine Art Trichter ausgebildet mit geraden Wänden. Der Spitzenwinkel dieses Trichters muss dem Spitzenwi n-kel des Kegels der Mantelfläche des Beschlagelements entsprechen, so dass das Beschlagelement in den Durchgang des Beschlaggegenelements eingesetzt werden kann. Mithilfe der Schraube lässt sich daher das Beschlagelement in den Durchgang einziehen und damit das Beschlaggegenelement an dem Holzbauteil fest schrauben.

Auch das Beschlaggegenelement kann erfindungsgemäß nach Art einer Scheibe ausgebildet sein, wobei hier zur Erleichterung des Ausrichtens eine rechteckige oder quadratische Form bevorzugt wird.

Das Beschlaggegenelement kann auch mehrere derartige trichterförmige Durchgänge aufweisen, insbesondere dann, wenn eine bestimmte Winkelausrichtung des Beschlaggegenelements erreicht werden soll.

Da das Beschlaggegenelement fabrikmäßig hergestellt werden kann, kann sein Durchgang auch andere Kegelformen als die Form eines geraden Kreiskegels aufweisen.

Anstelle des Vorsehens mehrerer Durchgänge in einem Beschlaggegenelement ist es auch möglich, mehrere Beschlaggegenelemente mit jeweils nur einem Durchgang miteinander zu verbinden, um dadurch eine Ausrichtung mithilfe mehrerer Beschlagelemente zu ermöglichen.

Erfindungsgemäß kann das Beschlaggegenelement in Weiterbildung eine Ausrichteinrichtung aufweisen, mit deren Hilfe es mit einem benachbarten Beschlaggegenelement ausgerichtet wird. Das benachbarte Beschlaggegenelement kann dabei an dem gleichen Holzbauteil befestigt sein, oder aber auch an einem anderen Holzbauteil.

Die Ausrichteinrichtung kann beispielsweise durch eine komplementäre Form von einander zugewandten Begrenzungsflächen verwirklicht werden, oder auch durch zusätzliche Hilfsmittel wie Bohrungen und Zapfen.

Die Erfindung schlägt ebenfalls eine Kombination aus einem Beschlagelement und einem Beschlaggegenelement vor. Die beiden Teile können speziell aufeinander abgestimmt werden.

Zur Befestigung von beispielsweise zwei Holzträgern können erfindungsgemäß Beschlagelemente und Beschlaggegenelemente nach der Erfindung verwendet werden. An dem einen Holzträger wird ein Beschlaggegenelement mithilfe eines Beschlagelements angeschraubt. Das gleiche gilt für den anderen Holzträger. Dann kann das Beschlaggegenelement des einen Holzträgers auf das Beschlaggegenelement des anderen Holzträgers aufgelegt werden, wobei durch die Ausrichteinrichtung eine Sicherung gegen seitliches Abrutschen gegeben ist. Das Gewicht des einen Holzträgers wirkt dann auf das Beschlaggegenelement des anderen Holzträgers.

Weitere Merkmale, Einzelheiten und Vorzüge der Erfindung ergeben sich aus den Ansprüchen und der Zusammenfassung, deren beider Wortlaut durch Bezugnahme zum Inhalt der Beschreibung gemacht wird, der folgenden Beschreibung bevorzugter Ausführungsformen der Erfi n-dung sowie anhand der Zeichnung. Hierbei zeigen:
- Figur 1: einen Schnitt durch ein Beschlagelement nach der Erfin- dung;
- Figur 2: eine Seitenansicht des Beschlagelements der Figur 1;
- Figur 3: schematisch das in ein Metallprofil eingesetzte Beschlag- element mit einer Schraube;
- Figur 4: die Draufsicht auf ein Beschlaggegenelement;
- Figur 5: einen Querschnitt durch das Beschlaggegenelement der Fi- gur 4;
- Figur 6: eine der Figur 4 entsprechende Darstellung eines verein- fachten Beschlaggegenelement;
- Figur 7: einen der Figur 5 entsprechenden vereinfachten Schnitt durch das Element der Figur 6;
- Figur 8: eine Draufsicht auf ein nochmals geändertes Beschlagge- genelement;
- Figur 9: einen der Figur 7 entsprechenden Schnitt durch das Ele- ment der Figur 8;
- Figur 10: die Anordnung zweier Beschlaggegenelemente der Figur 6 nebeneinander;
- Figur 11: die Art der Verbindung zweier Holzträger miteinander.

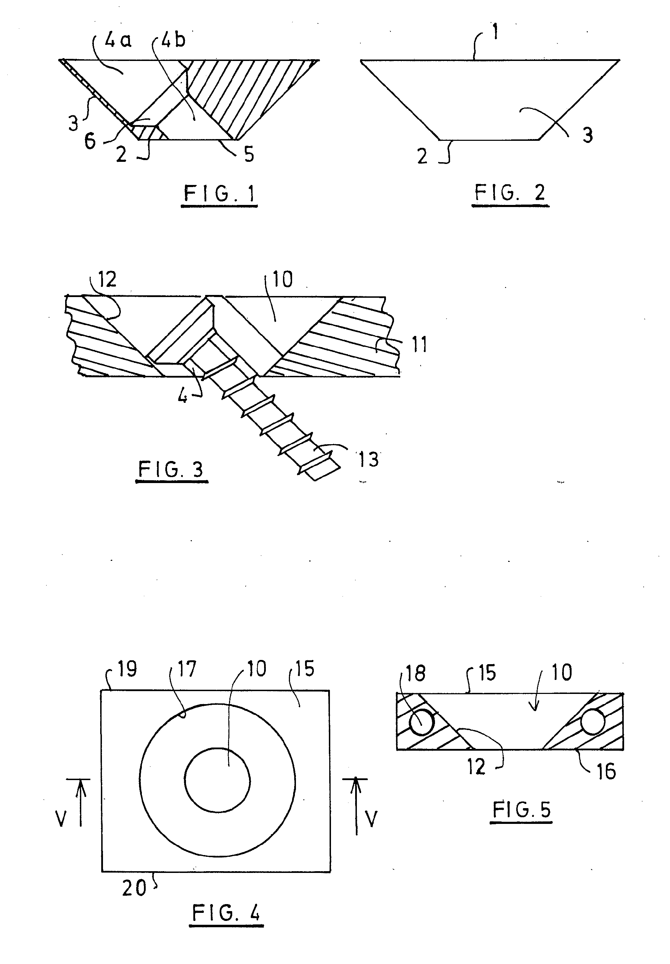

Die Figuren 1 und 2 zeigen die Seitenansicht beziehungsweise den Schnitt eines Beschlagelements nach der Erfindung. Im dargestellten Ausführungsbeispiel ist das Beschlagelement als Scheibe ausgebildet. Es enthält eine ebene Außenseite 1 und eine parallel zu dieser verlaufenden ebenfalls ebene Innenseite 2. Zwischen diesen beiden Seiten 1 und 2 erstreckt sich die Mantelfläche 3, die in einer Kegelfläche liegt und im dargestellten Ausführungsbeispiel geschlossen ist. Es handelt sich bei der Kegelfläche um die Kegelmantelfläche eines Kreiskegels.

Durch das Beschlagelement erstreckt sich ein Durchgang 4, der von der Außenseite 1 zu der Innenseite 2 hindurchgeht und schräg verläuft. Der Durchgang 4 weist überall einen Kreisquerschnitt auf. Die Achse des Durchgangs 4 verläuft schräg zu der gedachten Achse des Kegels, auf dessen Mantelfläche die Mantelfläche 3 des Beschlagelements liegt. Die Ausgangsöffnung 5 des Durchgangs 4 liegt im dargestellten Ausführungsbeispiel vollständig in der Ebene der Innenseite 2.

Der Durchgang 4 weist einen von der Außenseite 1 ausgehenden Abschnitt 4a mit einem größeren Durchmesser und einen in der Innenseite 2 mündenden Abschnitt 4b mit einem kleineren Durchmesser auf. Zwischen beiden Abschnitten 4a ,4b ist ein kegelförmiger Übergang 6 gebildet. Der Kegelwinkel dieses Übergangsbereichs 6 entspricht der Unterseite eines üblichen Schraubenkopfs.

Der Kegelwinkel des Kegels, in dessen Mantelfläche die Mantelfläche 3 des Beschlagelements liegt, beträgt im dargestellten Ausführungsbeispiel 90°. Die Achse des Durchgangs 4 verläuft in dem Schnitt der Figur 1 parallel zu der Erzeugenden, so dass die Achse des Durchgangs 4 auf der gegenüberliegenden Seite senkrecht zu der Erzeugenden verläuft.

Das in den Figuren 1 und Figur 2 dargestellte Beschlagelement ist dazu bestimmt, ein anderes Element an einer Holzkonstruktion anzuschrauben. Zu diesem Zweck muss das andere Element, beispielsweise ein metallisches Lochband oder dergleichen, eine Öffnung 10 haben, in die das Beschlagelement eingesetzt werden kann. Die Öffnung muss also komplementär zu der Außenseite des Beschlagelements ausgebildet sein. Im einfachsten Fall muss es sich um eine Durchgangsöffnung mit einer Ansenkung des gleichen Winkels handeln, der dem Kegelwinkel der Mantelfläche 3 des Beschlagelements entspricht. Ein derartiges Anwendungsbeispiel ist in Figur 3 im Schnitt dargestellt. Ein metallisches Element 11 weist die kegelstumpfförmige Öffnung 10 auf, in die das Beschlagelement eingesetzt werden kann.

Das Beschlagelement liegt mit seiner Mantelfläche an der Innenfläche 12 der Öffnung 10 an. Eine Belastung tritt beim Festschrauben aber nur an bestimmten Stellen der Mantelfläche 3 auf, so dass das Beschlagelement nicht als vollständige Kegelscheibe entsprechend Figur 1 und Figur 2 ausgebildet sein muss. Es reicht aus, das Beschlagelement nur als einen Teil der Kegelscheibe auszubilden. Dies ist in Figur 3 ebenfalls dargestellt.

Durch den Durchgang 4 des in die Öffnung 10 des metallischen Elements 11 eingesetzten Beschlagelements wird eine Schraube 13 gesteckt und in das darunter liegende in Figur 3 nicht dargestellte Holzelement eingeschraubt. Die Schraube 14 zieht das Beschlagelement gegen die Wand 12 der Öffnung 10. Die Belastungsrichtung des metallischen Elements 11 bei der in Figur 3 dargestellten Anordnung ist nach links in Figur 3, da auf diese Weise die Schraube 13 im Wesentlichen auf Zug beansprucht wird.

Wenn die Mantelfläche 3 des Beschlagelements und die Wand 12 der Öffnung 10 in einer Kegelmantelfläche eines geraden Kreiskegels liegt, kann die Orientierung des Winkels der Schraube 13 gegenüber dem metallischen Element 11 variiert werden, und zwar winkelmäßig um eine senkrecht zur Oberfläche des Holzelements liegende Achse. Es ist aber ebenfalls möglich, wenn eine Befestigung nur in einer bestimmten Ausrichtung erfolgen soll, sowohl die Mantelfläche 3 des Beschlagelements als auch die Wand 12 der Vertiefung 10 auf einer Kegelfläche anzuordnen, die von einem Kreiskegel abweicht, beispielsweise einem elliptischen Kegel.

Wenn in einer bestimmten Situation ein solches metallisches Element 11 nicht vorhanden ist oder üblicherweise nicht zur Verfügung steht, kann das Beschlagelement der Figuren 1 und 2 auch mit einem speziell vorgesehenen Beschlaggegenelement verwendet werden. Die Figuren 4 und 5 zeigen eine Draufsicht beziehungsweise einen Schnitt durch eine Ausführungsform eines solchen Beschlaggegenelements. Es ist im ei n-fachsten Fall, der in den Figuren 4 und 5 dargestellt ist, als flache Scheibe ausgebildet, mit einer ebenen Vorderseite 15 und einer parallel zu dieser verlaufenden ebenen Rückseite 16. In dieser Scheibe ist die Vertiefung 10 angeordnet, die sich in ihrer Form nicht von dem Ausführungsbeispiel der Figur drei unterscheidet. Diese durchgehende Öffnung weist also eine Wand 12 auf, die in einer Kegelfläche liegt. Wie man der Figur 4 entnehmen kann, handelt es sich auch hier um einen Kreiskegel, und die in der Vorderseite 15 des Beschlaggegenelement ausmündende Öffnung dieser Vertiefung 10 wird von einer Kante 17 in Form eines Kreises begrenzt.

Dieses Beschlaggegenelement kann mit einem Beschlagelement an einer Holzkonstruktion festgeschraubt werden, ähnlich wie bei der Ausführungsform nach Figur 3.

Zusätzlich hat das Beschlaggegenelement von mindestens einer quer zur Vorderseite 15 und zur Rückseite 16 verlaufenden Stirnseite 19 ausgehend Bohrungen 18, die in dem Schnitt der Figur 5 zu sehen sind. Insbesondere können die Bohrungen 18 auf zwei einander gegenüberliegenden Stirnseiten 19, 20 angeordnet sein. Diese Bohrungen dienen zur Aufnahme von Zapfen, mit denen zwei Beschlaggegenelemente gegenseitig ausgerichtet werden können. Diese mithilfe von Zapfen ausgerichteten Beschlaggegenelemente können an dem gleichen Bauteil angebracht sein, oder auch an zwei verschiedenen Bauteilen. Beispiele hierfür werden später noch beschrieben werden.

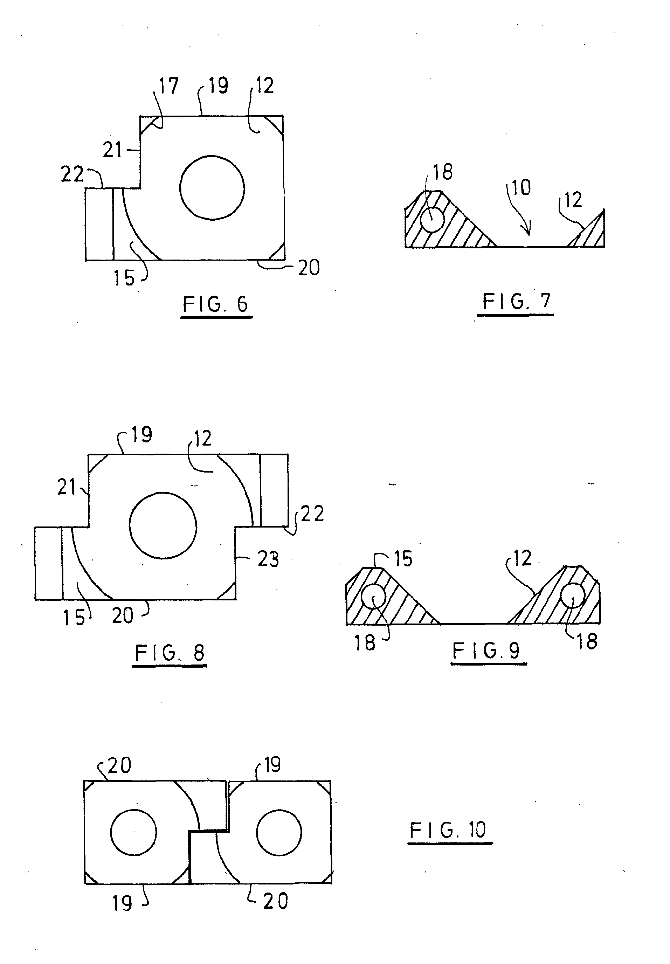

Es wurde bereits unter Bezugnahme auf Figur 3 erwähnt, dass das Beschlagelement nicht vollständig als Scheibe mit ebener Vorderseite und ebener Rückseite ausgebildet sein muss, da die Kraftübertragung nur an bestimmten Teilen der Mantelfläche erfolgt. Das gleiche gilt auch für das Beschlaggegenelement. Es wird jetzt auf die Figuren 6 und 7 verwiesen, die eine weitere Ausführungsform in einer Darstellung ähnlich Figur 4 und 5 darstellen. Figur 6 zeigt also eine Draufsicht auf ein Beschlaggegenelement, bei dem eine der beiden seitlichen Stirnkanten 21 stufenförmig versetzt ist. Die Stufe ist genau in der Mitte der Stirnkante, so dass ein zweites Beschlaggegenelement in einer um 180° versetzten Anordnung hier eingefügt werden kann. In der Stirnkante 20 sind wiederum Bohrungen 18 ausgebildet, die beispielsweise durch das ganze Beschlaggegenelement hindurch gehen. Die linke Bohrung 18 tritt also an der Stufe 22 aus.

Das Beschlaggegenelement der Figur 6 und 7 ist insgesamt etwas weniger dick als das Beschlaggegenelement der Figur 4 und 5, so dass die die Kegelfläche 12 begrenzende Linie 17 nur teilweise in der Oberseite 15 liegt. Anders ausgedrückt ist die Kegelfläche 12 nur unvollständig ausgebildet.

Während das Beschlaggegenelement der Figur 6 und 7 an der einen Seite eine Stufe 21, 22 aufweist, zeigt die Figur 8 und die Figur 9 eine Ausführungsform, bei der an zwei einander gegenüberliegenden seitlichen Stirnkanten jeweils eine identische Stufe 21, 22 ausgebildet ist. Hier ist es möglich, mehrere derartige Beschlaggegenelemente nebeneinander anzuordnen und durch Zapfen miteinander zu verbinden, die in die entsprechenden Bohrungen 18 eingesetzt werden.

Die Figur 10 zeigt eine Draufsicht auf zwei Beschlaggegenelemente der Figur 6, die nebeneinander mit der Weise angeordnet sind, dass die Stufen 21, 22 ineinander eingreifen. Werden diese Beschlaggegenelemente mit zwei Beschlagelementen der Figur 1 und 2 an einer Unterkonstruktion festgeschraubt und durch einen Zapfen in den Bohrungen 18 gesichert, sind beide Beschlaggegenelemente gegen ein Verdrehen um die Achse des Lochs 10 gesichert.

Bei Beschlaggegenelementen der Figur 8 lassen sich dann noch weitere Beschlaggegenelemente nebeneinander anordnen.

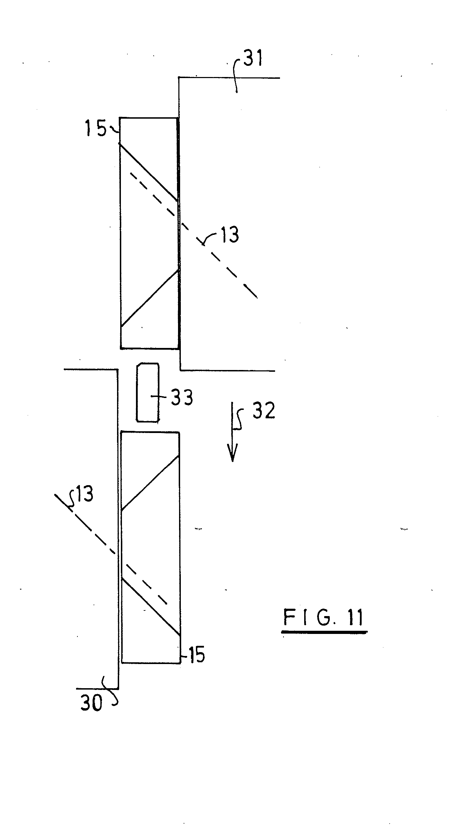

Die Figur 11 zeigt einen Anwendungsfall für Beschlagelemente und Beschlaggegenelemente aus den vorherigen Figuren. Hier soll an einer Holzkonstruktion 30 eine andere Holzkonstruktion 31 angebracht werden. Die Belastung der Holzkonstruktion 31 wirkt in Richtung des Pfeils 32. An dem in Figur 11 linken Bauteil 30, beispielsweise einem festen Balken, wird mithilfe eines Beschlagelements ein Beschlaggegenelement befestigt. Das Beschlagelement wird in der Weise in die Vertiefung 10 eingesetzt, dass der Durchgang 4 so orientiert ist, dass die Befestigungsschraube 13 von der Außenseite her schräg nach oben eingeschraubt wird. Damit ist das Beschlaggegenelement an der Holzkonstruktion 30 festgelegt. Natürlich erfolgt die Festlegung in der Weise, dass die obere Stirnseite 19 des Beschlaggegenelements horizontal verläuft.

In die in der oberen Stirnseite 19 vorhandene Bohrung 18, bei der es sich beispielsweise um ein Sackloch handelt, wird dann ein Zapfen 33 eingesetzt. An den Holzbalken 31, der mit der Konstruktion 30 verbunden werden soll, wird ein identisch oder ähnlich aufgebautes Beschlaggegenelement mit einem Beschlagelement festgeschraubt. Hier wird das Beschlagelement in der Weise orientiert, dass die durch den Durchgang 4 geschraubte Schraube 13, die nur angedeutet ist, von oben schräg nach unten eingeschraubt wird.

Anschließend wird das Beschlaggegenelement des Balkens 31 so ausgerichtet, dass der Zapfen 33 in die entsprechende Bohrung 18 des oberen Beschlaggegenelement eingreift. Damit sind die beiden Holzbauteile 30, 31 miteinander verbunden. Die Last wird von den Schrauben 13 aufgenommen, die beide im Wesentlichen auf Zug beansprucht werden. Das Abrutschen des oberen Balkens 31 in einer Richtung senkrecht zur Papierebene oder nach rechts wird durch das Eingreifen des Verbindungszapfens 33 in die Bohrung 18 verhindert.

## Patentansprüche

1. Beschlagelement, mit
1.1 einer in einer Kegelfläche liegenden Mantelfläche (3),
1.2 einem durch das Beschlagelement hindurch gehenden Durchgang (4) für den Schaft (13) einer Schraube,
1.3 einer Anlagefläche für die Unterseite des Schraubenkopfs einer in dem Durchgang (4) angeordneten Schraube, wobei
1.4 die Achse des Durchgangs (4) schräg zur Kegelachse verläuft.

2. Beschlagelement nach Anspruch 1, bei dem die Kegelfläche die Fläche eines geraden Kegels, insbesondere eines geraden Kreiskegels, ist.

3. Beschlagelement nach Anspruch 1 oder 2, bei dem die Anlagefläche für die Unterseite des Schraubenkopfs versenkt in dem Beschlagelement angeordnet ist.

4. Beschlagelement nach einem der vorhergehenden Ansprüche, bei dem die Achse des Durchgangs (4) parallel zu der Erzeugenden der Kegelfläche verläuft.

5. Beschlagelement nach einem der vorhergehenden Ansprüche, als Scheibe ausgebildet.

6. Beschlagelement nach einem der vorhergehenden Ansprüche, bei dem der Kegelwinkel des Kegels 90° beträgt.

7. Beschlaggegenelement, mit
7.1 einer zur Anlage an einem Bauelement bestimmten Rückseite (16),
7.2 einer der Rückseite gegenüberliegenden Vorderseite (15),
7.3 einem Durchgang (10) zwischen der Vorderseite (15) und der Rückseite (16), der
7.4 von einer in einer Kegelfläche liegenden Fläche (12) begrenzt ist.

8. Beschlaggegenelement nach Anspruch 7, als Scheibe ausgebildet.

9. Beschlaggegenelement nach Anspruch 7 oder 8, mit einer Ausrichteinrichtung zu seinem Ausrichten mit einem benachbarten Beschlaggegenelement, das an dem gleichen Bauelement oder an einem anderen Bauelement angebracht ist.

10. Beschlaggegenelement nach einem der Ansprüche 7 bis 9, bei dem die Ausrichteinrichtung eine Bohrung (18) und/oder einen Zapfen (33) aufweist.

11. Kombination aus Beschlagelement und Beschlaggegenelement, wobei der Kegelwinkel der Kegelflächen beider Elemente gleich ist.

12. Verwendung eines Beschlagelements nach einem der Ansprüche 1 bis 6 zur Befestigung eines Beschlaggegenelements nach einem der Ansprüche 7 bis 10 an einem Bauelement.

13. Befestigungsanordnung aus zwei Bauelementen, mindestens zwei Beschlaggegenelementen nach einem der Ansprüche 7 bis 11 und mindestens zwei Beschlagelementen nach einem der Ansprüche 1 bis 6, wobei an jedem Bauelement mindestens einen Beschlaggegenelement mithilfe eines Beschlagelements angeschraubt ist und die Beschlaggegenelemente der beiden Bauelemente formschlüssig gegen Abrutschen gesichert sind.

14. Befestigungsanordnung nach Anspruch 13, bei der die Beschlaggegenelemente der beiden Bauelemente durch Eingreifen von Zapfen (33) in Bohrungen (18) gegen Abrutschen gesichert sind.
